## Europäisches Patentamt

## European Patent Office

## Office européen des brevets

(19)

(11) Veröffentlichungsnummer: **0 174 967**

**B1**

(12) **EUROPÄISCHE PATENTSCHRIFT**

(45) Veröffentlichungstag der Patentschrift:
15.11.89

(21) Anmeldenummer: 85901351.8

(22) Anmeldetag: 27.02.85

(86) Internationale Anmeldenummer:
PCT/DE 85/00060

(87) Internationale Veröffentlichungsnummer:
WO 85/03890 (12.09.85 Gazette 85/20)

(51) Int. Cl.⁴: **B 07 B 13/00**, B 07 B 15/00,
B 03 B 9/06

(54) SORTIEREINRICHTUNG ZUR ZURÜCKGEWINNUNG VON WERTSTOFFEN AUS MÜLL.

(30) Priorität: 01.03.84 DE 3407611
01.03.84 EP 84102186
21.04.84 DE 3415090

(43) Veröffentlichungstag der Anmeldung:
26.03.86 Patentblatt 86/13

(45) Bekanntmachung des Hinweises auf die Patenterteilung:
15.11.89 Patentblatt 89/46

(84) Benannte Vertragsstaaten:
AT BE CH DE FR GB IT LI NL SE

(56) Entgegenhaltungen:
EP-A-0 123 825
CA-A-1 110 996
DE-A-22 533 533
DE-C-182 993
DE-C-804 191
DE-C-804 191
FR-A-2 481 617
GB-A-566 183
GB-A-824 414
GB-A-2 070 978

The National Institute of Agricultural Engineering,
"Agricultural engineering record", Vol. 2, Autumn
1947 - Summer 1949, published from H.M. Stationary
Office, London (GB), page 40, figures 12, 14
Soviet Inventions Illustrated, 11 March 1981,

(73) Patentinhaber: **Maschinenfabrik Bezner GmbH &
Co. KG, Holbeinstrasse 30, D-7980 Ravensburg
(DE)**

(72) Erfinder: **STEHLE, Wolfgang, Tödiweg 34, D-7981
Schlier (DE)**
Erfinder: **FUCHS, Dieter, Säntisweg 46, D-7981
Waldburg (DE)**

(74) Vertreter: **Patentanwälte Dipl.- Ing. E. Eisele Dr.-
Ing. H. Otten, Seestrasse 42, D-7980 Ravensburg
(DE)**

(56) Entgegenhaltungen: (Fortsetzung)
Derwent Publications Ltd. London (GB) & SU-
A-737027

LIBER, STOCKHOLM 1989

## Beschreibung

Die Erfindung betrifft eine Sortiereinrichtung insbesondere zur Aussortierung von Wertstoffen aus Hausmüll, Gewerbemüll, Sperrmüll, Trockenmüll, und/oder von Problem- und Gefahrenstoffen nach dem Oberbegriff des Anspruchs 1.

Eine derartige Einrichtung bzw. Anlage ist beispielsweise in der im Sinne von Art. 54 (3) älteren Anmeldung EP-A-123 825 beschrieben. Diese Sortiereinrichtung dient insbesondere zur Trennung von räumlich körperlichem schweren Gut von leichtem flächenhaften Gut.

Aus der Veröffentlichung AGRICULTURAL ENGINEERING RECORD Band 2, 1949, S. 40 ist eine Sortiereinrichtung zur Sortierung von unterschiedlichen Gegenständen, insbesondere zum Aussortieren von Kartoffeln und Steinen bekannt geworden. Hierzu ist ein leicht ansteigendes Transportband mit einem quer zur Transportrichtung gestellten Rückhaltevorhang vorgesehen. Die schwereren Steine werden dabei auf dem Transportband in gleicher Transportrichtung belassen und unterfahren den stationären oder sich bewegenden Vorhang. Kleinere und leichtere Kartoffeln werden demgegenüber am Vorhang zurückgehalten und seitlich abgestreift.

Das gleiche Prinzip ist in der GB-A-2 070 978 aufgeführt. Hier werden jedoch durch den sich vorzugsweise bewegenden Transportvorhang die größeren Teile seitlich ausgelenkt, während die kleineren Teile unter den Vorhang hindurch können.

Die Vorrichtung gemäß der Veröffentlichung AGRICULTURAL ENGINEERING könnte zwar ebenfalls zur Sortierung von Wertstoffgemischen verwendet werden, wobei schwerere Materialien wie Flaschen o. dgl. durch den Vorhang hindurchgleiten könnten, während leichtere Materialien wie Papier o. dgl. seitlich durch den Vorhang abgestreift würden. Ein befriedigender Trenneffekt dieser unterschiedlichen Bestandteile könnte sich sicherlich nicht einstellen, da ein Großteil der körperförmigen Teile auch durch den Fangvorhang und durch die ansteigende Transportrichtung seitlich abgelenkt würden.

Auch die Sortiervorrichtung gemäß der GB-A-2 070 978 eignet sich wenig zur Sortierung von Wertstoffen, da sich auf deren rauhen Oberfläche das Wertstoffgemisch vollständig verhaken und verkletten würde.

Der Erfindung liegt die Aufgabe zugrunde, die verschiedenen Bestandteile von Wertstoffgemischen in einer hierfür optimierten Einzelsortiereinrichtung zu sortieren, wobei diese flexibel einsetzbar und unempfindlich im Betrieb ist und niedrige Herstellungs- und Betriebskosten aufweist.

Diese Aufgabe wird durch die kennzeichnenden Merkmale des Anspruchs 1 gelöst.

In den Unteransprüchen sind vorteilhafte und zweckmäßige Weiterbildungen der Erfindung enthalten.

Gemäß der Erfindung ist eine Wertstoffsortiereinrichtung vorgesehen, die durch ein kombiniertes Bandsystem eine Trennung von schwerem flächenhaften von leichten räumlichen Teilen bewerkstelligt. Durch die Anordnung des schrägen Bandes sowie durch eine gezielte Anordnung von Fangvorhängen sowie durch die Schwerkraft wird eine Absonderung der schweren flächenhaften Teilen von leichten körperförmigen Teilen erzielt.

Eine zusätzliche Anordnung sieht vor, daß mittels einer zusätzlichen Sortiermaschine eine mechanische Absortierung von Textilien, Bändern, Schnüren, Strümpfen, Folienstreifen o. dgl. ermöglicht wird. Hierdurch kann ein nachteiliges Verstopfen von nachfolgenden Einrichtungen vermieden werden.

Ein vorteilhaftes und zweckmäßiges Ausführungsbeispiel der Erfindung ist in den Zeichnungen dargestellt und in der nachfolgenden Beschreibung näher erläutert. Es zeigen

Fig. 1   eine Seitenansicht einer erfindungsgemäßen Sortiereinrichtung, zur Trennung körperförmigen von flächenförmigen Teilen,

Fig. 2   eine Einzelkette nach Fig. 1,

Fig. 3   eine zusätzliche Sortiermaschine, zur Trennung von Textilien, Schnüren, Bändern o. dgl.,

Fig. 4   eine Draufsicht nach Fig. 3.

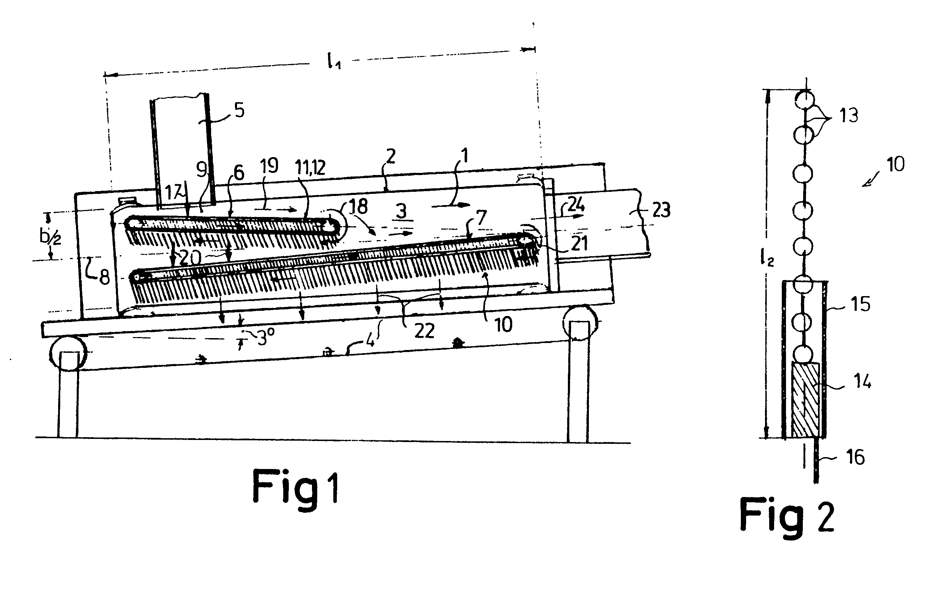

Die in der Fig. 1 dargestellte Sortiereinrichtung dient zum Beispiel zur Verarbeitung von sogenanntem Mischpapier, d. h. schwereres flächenhaftes Papiergut, wie z. B. Zeitschriften, Illustrierte, Hefte, Kataloge usw., sollen von leichtem, räumlich ausgedehnten Papiergut, wie z. B. zerknülltes Papier, Plastikfolien, Packpapiersäcke usw., getrennt werden. Die Vorrichtung gemäß der Fig. 1 weist dabei keine überlagerte Vibration auf, so daß das aufgebrachte zu sortierende Gut auf einer glatten Oberfläche infolge der Schwerkraft herabrutscht. Die umlaufenden Kettenvorhänge ermöglichen eine Trennung der verschiedenen Fraktionen.

Die Anordnung von zwei in einem Winkel zueinander verlaufende Fangvorhänge hat dabei den Vorteil, daß das auf die Fördereinrichtung gelangende Gut nicht sofort infolge der Schwerkraft auf der Transportebene mit niedrigem Reibwert herunterrutscht und infolge der Herabrutschgeschwindigkeit den Fangvorhang durchschlägt. Das zu sortierende Gut soll der Fördereinrichtung gedämpft zugeführt werden, wobei der obere Fangvorhang im Bereich der Aufgabestation des zu sortierenden Gutes beginnt.

Es ist weiterhin vorgesehen, daß die Fangvorhänge als umlaufende Vorhänge ausgebildet sind. Hierdurch wird die Bewegung des zu sortierenden Gutes durch das Transportband unterstützt und eine schnelle Verteilung des Gutes erreicht. Die erfindungsgemäße Sortiereinrichtung kann in Sonderfällen auch mit nur einem umlaufenden Fangvorhang betrieben werden. Das optimale Ergebnis wird durch Versuche mit unterschiedlichen Wertstoffen ermittelt.

Nachstehend ist die Wertstoffsortiereinrichtung gemäß Figuren 1 und 2 näher erläutert:

Die in der Fig. 1 dargestellte Wertstoffsortiereinrichtung besteht aus einer in Transportrichtung 1 unter einer Steigung von ca. 3° ansteigenden Fördereinrichtung 2, welche als Transportband mit niedrigem Reibwert, z. B. Kunststoffoberfläche, ausgebildet ist. Die Transportebene 3 der Fördereinrichtung 2 ist gegenüber der Horizontalen um ca. 40° geneigt bzw. schräg gestellt. Parallel zum Förderband 2 kann ein weiteres Förderband 4 vorgesehen sein, welches eine durch die Fördereinrichtung 2 getrennte Fraktion aufnehmen kann.

Die Fördereinrichtung 2 weist etwa eine Länge von $l_1 \approx 3$ m und $b \approx 2$ m auf. Die Drehzahl des Transportbandes beträgt ca. 50 U/Min. Die Umfangsgeschwindigkeit ca. 0,50 m/Sec.

Das Einwurfband 5 mündet im unteren Bereich des leicht schräg gestellten Transportbandes 2 jedoch im oberen Bereich des schräg gestellten Transportbandes. Die Abwurfhöhe des zu sortierenden Papiergemisches beträgt ca. 700 mm. Die Umfangsgeschwindigkeit des Einwurfbandes 5 beträgt ca. 0,80 m/Sec.

Die Sortiermaschine weist zwei Kettenvorhänge 6, 7 auf. Der kürzere Kettenvorhang 6 weist etwa eine Länge von 1,5 m auf. Mit der Mittellinie 8 der Fördereinrichtung 2 schließt die Längsachse des kurzen Kettenvorhangs 6 einen Winkel von ca. 14° ein. Der kurze Kettenvorhang 6 ist demnach kurz vor der Aufgabestelle 9 des zu sortierenden Mischpapiers angeordnet und läuft schräg zur Mittellinie 8 der Fördereinrichtung 2 hin.

Der zweite längere Kettenvorhang 7 ist unterhalb des ersten kürzeren Kettenvorhangs 6 angeordnet. Dieser längere Kettenvorhang verläuft vom unteren seitlichen Rand der Fördereinrichtung 2 in Transportrichtung gesehen zur Mittellinie 8 des Förderbandes hin. Der lange Kettenvorhang erstreckt sich über die ganze Länge des Transportbandes 2 und beginnt am Anfang etwa am unteren seitlichen Ende und endet etwa im Bereich der Mittellinie 8 des Transportbandes. Der mit der Mittellinie 8 eingeschlossene Winkel beträgt ca. 8°.

Die beiden Kettenvorhänge 6, 7 sind als umlaufende Kettenvorhänge ausgebildet. Hierfür sind die einzelnen, den Kettenvorhang 6, 7 bildenden Ketten 10 an einer umlaufenden Transportkette 11 in einer Kettenführungsschiene 12 befestigt. Die Umlaufgeschwindigkeit der Kettenvorhänge 6, 7 beträgt ca. 0,5 m/Sec.

In Fig. 2 ist eine Kette 10, aus welchem sich die Kettenvorhänge 6, 7 zusammensetzen, dargestellt. Die Kette 10 ist in der in Fig. 2 nicht näher dargestellten oberen Transportkette 11 eingehängt, die ihrerseits in der Kettenführungsschiene 12 läuft. Die Kette 10 wird aus Kettengliedern 13 gebildet, wobei am unteren Ende ein Rundstahl 14 (25 x 90 mm) als Gewicht vorgesehen ist. Das Gewicht der Kette 10 beträgt ca. 700 g. Die untere Hälfte der Kette 10 wird mit einem Kunststoffschlauch 15 überzogen. Ein Gummiband 16 dient als unterer Abschluß der Kette 10. Die Länge $l_2$ der Kette beträgt ca. 450 mm.

Die Kettenführungsschiene 12 mit den an der Transportkette 11 hängenden Einzelketten 10 ist derart oberhalb der Fördereinrichtung 2 angeordnet, daß das untere Gummiband 16 (Maße 20 x 4 x 80) jeder einzelnen Kette 10 ca. 10 bis 20 mm auf der Transporteinrichtung 2 aufliegt.

Nachstehend wird die Funktionsweise der Sortiereinrichtung näher erläutert: Das zum Beispiel zu sortierende Mischpapiergut besteht im wesentlichen aus schwerem flächenhaften Gut wie Zeitschriften, Illustrierte, Kataloge o. dgl. sowie leichtem räumlichen aufgebauschten Papier, wie zerknüllte Zeitungen, zerknülltes Packpapier o. dgl. Dieses Mischpapier wird über das Einwurfband 5 der Fördereinrichtung 2 zugegeben (Pfeil 17), wobei das Gut aus einer Höhe von ca. 700 mm auf die Transportebene 3 herabfällt. Durch dieses Herabfallen erfolgt schon eine gewisse Trennung der unterschiedlichen Papiersorten.

Die leicht ansteigende Fördereinrichtung 2 mit glatter Kunststoffoberfläche und mit niedrigem Reibwert bewegt sich in Richtung Pfeil 1. Durch die schräge Anordnung der Transportebene 3 gegenüber der Horizontalen um einen Winkel von ca. 40° rutscht das aufgegebene Mischpapier auf der glatten Transportebene 3 gegen den kürzeren Kettenvorhang 6, der sich ebenfalls in Transportrichtung (Pfeil 18) dreht. Dabei wird leichteres und räumlich ausgedehntes Papiergut entlang dem kürzeren Kettenvorhang 6 transportiert (Pfeil 19), während schwereres, flächenhaftes Papiergut wie Zeitschriften und Kataloge durch bzw. unter den kurzen Kettenvorhang 6 hindurchgleiten und entlang der Schräge der Transportebene 3 infolge der Schwerkraft (Pfeil 20) und zu dem unteren, längeren Kettenvorhang 7 gelangen. Der längere Kettenvorhang 7 arbeitet prinzipiell gleich wie der kürzere Kettenvorhang 6. Dieser bewegt sich ebenfalls in Transportrichtung 1 entsprechend dem Pfeil 21. Schwereres Gut wie Zeitschriften, Kataloge rutschen durch den längeren Kettenvorhang hindurch (Pfeil 22) und gelangen zum parallel laufenden Transportband 4 zur Weiterverwertung. Das leichtere, räumliche Papiergut bleibt oberhalb der Kettenvorhänge 6, 7 und wird am Ende der Sortiermaschine über ein Transportband 23 weiter transportiert (Pfeil 24). Das schwerere flächenhafte Papiergut kann unterhalb der Kettenvorhänge 6, 7 hindurchgleiten, da die untere Begrenzung lediglich durch das flexible Gummiband 16 bewerkstelligt wird. Im übrigen hält der schwere Kettenvorhang das leichtere, räumliche Papiergut oder auch Kunststoffmaterial zurück. Hierdurch wird eine perfekte Trennung von Mischpapiersorten erzielt.

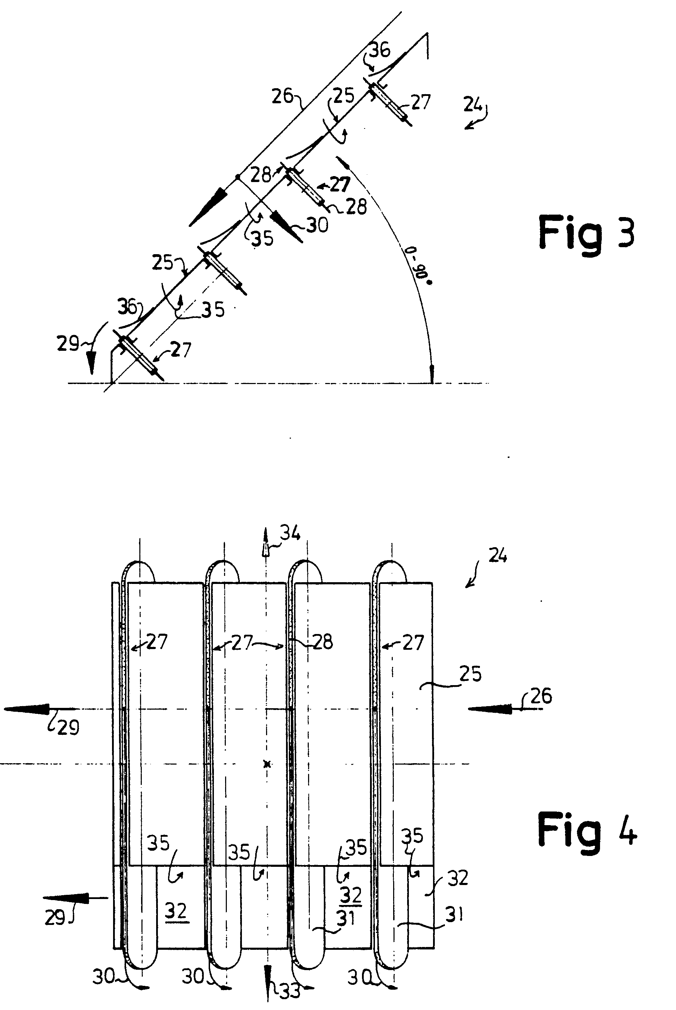

Sofern die erfindungsgemäße Vorrichtung nach Figuren 1 und 2 auch zur Trennung von leichteren räumlichen bzw. körperförmigen Teilen, wie Stoffe, Stoffreste o. dgl., von flachen schwereren Teilen eines Wertstoffgemisches dient, so kann dieser Anlage eine Sortiermaschine nach Figuren 3 und 4 nachgeschaltet sein.

Diese Sortiermaschine ist derart ausgestaltet, daß insbesondere eine mechanische Absortierung von Textilien, Bändern, Schnüren, Strümpfen, Folienstreifen o. dgl. aus dem unsortierten Wertstoffgemisch ermöglicht wird. Dies ist deshalb von großer Bedeutung, da diese Wertstoffe bei einer Nachsortierung beispielsweise über Siebmaschinen dort zu Verstopfungen führen würden. Außerdem benötigen diese Stoffe einen besonders hohen manuellen Sortieraufwand.

Hierzu arbeitet die in Figur 3 und 4 dargestellte Sortiermaschine 24 prinzipiell gleich wie die in den Figuren 1 und 2 dargestellte Sortiereinrichtung, d. h. das abzusortierende Gut wird seitlich oder in jeweils zu optimierenden Winkeln zum Hauptförderstrom über ein geeignetes Fördermittel aus dem vorzugsweise durch Schwerkraft fließenden Materialstrom ausgetragen. Dabei kann die Transportebene mit einer ggf. überlagerten Bewegung, d. h. flächigen Siebbewegung, Vibration o. dgl. beaufschlagt sein, dies ist jedoch nicht zwingend notwendig.

Wie in Figur 3 (Stirnansicht) und 4 (Draufsicht) dargestellt, wird das Wertstoffgemisch auf die schräge Transportebene 25 der Sortiereinrichtung 24 aufgebracht, deren Neigung vorzugsweise zwischen 30° bis 60° gegenüber der Horizontalen liegen kann. Die Haupttransportrichtung infolge der Schwerkraft ist mit dem Pfeil 26 gekennzeichnet. Senkrecht oder in einem Winkel zu dieser Transportrichtung 26 weist diese spezielle Sortiereinrichtung 24 erfindungsgemäß zusäztliche Fördermittel 27 auf, die, wie in der Zeichnung dargestellt, beispielsweise als vier umlaufende Rollenketten mit in die schräge Transportebene 25 hineinragenden Stiften 28 ausgebildet sind. An Stelle einer Rollenkette kann jedoch auch ein umlaufendes Sägeblatt verwendet werden, dessen Zähne ebenfalls in die Transportebene hineinragen. Schließlich wäre auch ein umlaufendes Förderband mit hohem Reibwert oder ähnliches zusätzlich zwischen den Rollenketten oder alternativ verwendbar. Durch die in die Transportebene hineinragenden Stifte 28 bzw. Reibmittel werden Materialien wie Textilien, Bänder, Schnüre, Strümpfe usw. zuverlässig erfaßt und aus der Transportrichtung 26 als gesonderte Fraktion 30 ausgetragen. Die Fraktionen sind in der Figur 3 mit 29 und 30 bezeichnet, wobei die Fraktion 29 durch den durch Schwerkraft transportierten Wertstoffstrom, die Fraktion 30 durch den mittels dem Fördermittel 27 ausgetragenen Wertstoffstrom (Bänder, Schnüre usw.) gebildet werden.

Am Ende der schrägen Transportebene 25 ragt das Ende 31 des Fördermittels 37 schwertförmig hinaus. Darunter ist eine weitere Transporteinrichtung 32, zum Beispiel in Form einer schrägen Rutsche angeordnet, in welche gröbere Teile hinunterfallen, die zur Fraktion 29 gehören, die jedoch durch die mittels der Fördermittel 27 transportierten Wertstoffe mitgezogen wurden.

Ein Zurückhalten dieser Stoffe kann ggf. durch einen Vorhang ähnlich dem in Figur 1 erzielt werden. Die Wertstoffe die in die Transporteinrichtung 32 gelangen, können mit der Fraktion 29 zusammengeführt werden. Ähnlich der Funktion der Sortiereinrichtung gemäß den Figuren 1 und 2, kann jedoch über die Transporteinrichtung 32 eine dritte Fraktion 35 mit leichteren flächenhaften Stoffen ausgetragen werden, während die Fraktion 29 die schwereren und/oder körperförmige Stoffe enthält.

Die durch die Fördermittel 27 seitlich ausgetragenen Wertstoffe werden am Ende von dem Fördermittel dadurch abgestreift, indem die herausragenden Stifte 28 in ein Abstreifgitter o. dgl. hineingleiten, oder dadurch, daß die Stifte in einer Verkleidung eintauchen.

Die Transportrichtung der Fördermittel 27 kann in beiden Richtungen erfolgen. Dies ist durch die Pfeile 33, 34 angedeutet. Sie kann insbesondere auch in beliebige Winkel gegenüber dem Haupt-Wertstoffstrom 26 angeordnet sein.

Vor den jeweiligen Fördermitteln 27 können zusätzlich sprungschanzenartige Abweisevorrichtungen 36 angeordnet sein, die ein leichteres Überspringen von flächenhaften oder körperförmigen Teilen, d. h. Fraktion 29 ermöglichen, während Teile ohne innere Festigkeit durch die Fördermittel 27 erfaßt werden (Fraktion 30).

**Patentansprüche**

1. Wertstoffsortiereinrichtung zur Aussortierung von Wertstoffen aus Hausmüll, Gewerbemüll, Sperrmüll, Trockenmüll und/oder Problem- und Gefahrenstoffen, mit einer breiten, in Transportrichtung leicht ansteigenden Fördereinrichtung, (2) die einen, zur Fördereinrichtung-Längsachse winklig angeordneten Fangvorhang (7) aufweist, dadurch gekennzeichnet, daß die Fördereinrichtung eine quer zu ihrer Bewegungsrichtung abfallende oder schräge Transportebene (3) und wenigstens einen im Bereich der Wertstoffaufgabestelle, sich über die gesamte Länge der Fördereinrichtung erstreckenden Fangvorhang (7) aufweist, der in einem spitzen Winkel zur Längsmittelachse (8) der Fördereinrichtung ausgerichtet ist, und daß die Fördereinrichtung zur Trennung von flächenhaften, schweren Teilen von körperförmigen, leichten Teilen einen niedrigen Reibwert aufweist.

2. Sortiereinrichtung nach Anspruch 1, dadurch gekennzeichnet, daß im Bereich der Wertstoffaufgabestelle (9) ein weiterer Fangvorhang (6) zur Zurückhaltung von leichtem, räumlichen Papiergut o. dgl. vorgesehen ist, der sich etwa über die halbe Länge der Transporteinrichtung (2) erstreckt und daß insbesondere ein oder beide Fangvorhänge (6, 7) als umlaufende Kettenvorhänge ausgebildet sind.

3. Sortiereinrichtung nach Anspruch 1 oder 2, dadurch gekennzeichnet, daß die Fangvorhänge (6, 7) mit der Längsmittelachse (8) der Transportebene einen spitzen Winkel einschließen, der beim kurzen Fangvorhang ca. 14°, beim langen Fangvorhang ca. 8° beträgt, wobei die Fangvorhänge (6, 7) in Transportrichtung (1) zusammenlaufen.

4. Sortiereinrichtung nach Anspruch 1, 2 oder 3, dadurch gekennzeichnet, daß der Kettenvorhang (6, 7) aus einer Kettenführungsschiene (12) mit einer darin umlaufenden Transportkette (11) besteht, daß an der Transportkette herabhängende, den Vorhang bildende Einzelketten (10) vorgesehen sind, die im unteren Bereich ein Gewicht (14) zur Versteifung des Vorhangs sowie eine Gummilippe (16) aufweisen.

5. Sortiereinrichtung nach einem oder mehreren der vorhergehenden Ansprüche 1 bis 4, dadurch gekennzeichnet, daß der Fördereinrichtung eine ebene oder schräge Transporteinrichtung (24, 25) nachgeschaltet ist, auf welche das Wertstoffgemisch durch Schwerkraft transportierbar ist, wobei die Transporteinrichtung (24, 25) wenigstens mit einem zusätzlichen Fördermittel (27) versehen ist, mittels welchem an das Fördermittel (27) anhaftende Wertstoffe wie Textilien, Bänder, Schnüre, Strümpfe o. dgl. vom übrigen Wertstoffstrom austragbar sind.

6. Sortiereinrichtung nach Anspruch 5, dadurch gekennzeichnet, daß die Neigung der schrägen Transporteinrichtung (25) variierbar ist und vorzugsweise 30° bis 60° beträgt.

7. Sortiereinrichtung nach Anspruch 5 oder 6, dadurch gekennzeichnet, daß die Fördermittel (27) als umlaufende Rollenkette mit in die Transportebene (25) hineinragenden Stiften (28) oder als umlaufendes Sägeblatt und/oder als Förderband mit hohem Reibwert o. dgl. ausgebildet ist.

8. Sortiereinrichtung nach Anspruch 5, dadurch gekennzeichnet, daß - bezüglich des Wertstoffstroms - vor den Fördermitteln (27) Abweisevorrichtungen (36) zur Erzeugung eines sprungschanzenartigen Effekts vorgesehen sind.

9. Sortiereinrichtung nach einem oder mehreren der vorhergehenden Ansprüche 5 bis 8, dadurch gekennzeichnet, daß das Ende (31) der umlaufenden Rollenkette (27) o. dgl. frei überhängend aus der Transportebene (25) hinausragt und daß unterhalb dieses Bereichs Aufnahmeeinrichtungen oder weitere Transporteinrichtungen (32) für die nicht mit dem Fördermittel (27) auszutragende Fraktion vorgesehen sind.

## Claims

1. Valuable material sorting plant for separating valuable materials from domestic refuse, industrial refuse, bulky refuse, dry refuse and/or problematic and hazardous materials, with a wide conveyor (2) which ascends slightly in the conveying direction and comprises a collecting curtain (7) arranged at an angle to the longitudinal axis of the conveyor, characterised in that the conveyor comprises a conveying plane (3) which drops transversely to its direction of movement or is oblique and at least one collecting curtain (7) which extends over the entire length of the conveyor in the region of the valuable material charging point and is orientated at an acute angle to the longitudinal centre line (8) of the conveyor, and in that the conveyor has a low coefficient of friction for separating flat, heavy parts from three-dimensional light parts.

2. Sorting plant according to Claim 1, characterised in that, in the region of the valuable material charging point (9) there is provided a further collecting curtain (6) for retaining light, spatial paper products or the like which extends over roughly half the length of the conveying device (2) and in that, in particular, one or both collecting curtains (6, 7) are constructed as revolving chain curtains.

3. Sorting plant according to Claim 1 or 2, characterised in that the collecting curtains (6, 7) enclose, with the longitudinal centre line (9) of the conveying plane, an acute angle which is about 14° in the case of a short collecting curtain and about 8° in the case of a long collecting curtain, the collecting curtains (6, 7) converging in the conveying direction (1).

4. Sorting plant according to Claim 1, 2 or 3, characterised in that the chain curtain (6, 7) consists of a chain guide rail (121 with a conveying chain (11) revolving therein, in chat individual chains (10) which hang on conveying chain, form the curtain and have a weight (14) in their lower region for stiffening the curtain as well as a rubber lip (16) are provided.

5. Sorting plant according to-one or more of the preceding Claims 1 to 4, characterised in that the conveyor is followed by a plane or oblique conveying device (24, 25) onto which the mixture of valuable materials can be conveyed by gravity the conveying device (24, 25) being provided with at least one additional conveying means (27) by means of which materials adhering to the conveying means (27), such as textile products, ribbons, strings, stockings or the like can be extracted from the remainder of the stream of valuable materials.

6. Sorting plant according to Claim 5 characterised in that the inclination of the oblique conveying device (25) is variable and is preferably from 30° to 60°.

7. Sorting plant according to Claim 5 or 6, characterized in that the conveying means (27) is constructed as a revolving roller chain with pins (28) penetrating into the conveying plane (25) or as a revolving saw blade and/or no a conveyor belt with a high coefficient of friction or the like.

8. Sorting plant according to Claim 5, characterised in that rejecting devices (36) for producing a ski jump-like effect are provided in front of the conveyors (27) with respect to the flow of valuable materials.

9. Sorting plant according to one or more of the preceding Claims 5 to 8, characterised in that the end (31) of the revolving roller chain (27) or the like projects freely from the conveying plane (25) and in that receiving devices or further conveying devices (32) for the fraction not to be extracted by the conveying means (27) are provided beneath this region.

## Revendications

1. Installation de triage pour extraire des produits de valeur de déchets ménagers, industriels, encombrants, secs et/ou de matières dangereuses et posant des problèmes, comportant un transporteur large (2) montant légèrement dans la direction de transport, qui présente un rideau d'arrêt (7) disposé sous un angle par rapport à l'axe longitudinal du transporteur, caractérisée en ce que le transporteur présente un plan de transport (3) incliné ou oblique perpendiculairement à sa direction de mouvement et au moins un rideau d'arrêt (7) dans la zone de la position de chargement des produits de valeur, s'étendant sur toute la longueur du transporteur, qui est orienté sous un angle aigu par rapport à l'axe longitudinal médian (8) du transporteur, et en ce que le transporteur présente un faible coefficient de frottement pour la séparation de parties lourdes adhérant en surface de parties légères tridimensionnelles.

2. Installation de triage selon la revendication 1, caractérisée en ce que, dans la zone de la position de chargement des produits de valeur (9), est prévu un autre rideau d'arrêt (6) pour retenir du papier tridimensionnel léger ou analogue, qui s'étend à peu près sur la moitié de la longueur du transporteur (2), et en ce que, en particulier, un ou les deux rideaux d'arrêt (6, 7) sont réalisés sous forme de rideaux à chaînes rotatifs.

3. Installation de triage selon la revendication 1 ou 2, caractérisée en ce que les rideaux d'arrêt (6, 7) forment avec l'axe longitudinal médian (8) du plan de transport un angle aigu, qui s'élève à environ 14° pour le rideau court et à environ 8° pour le rideau long, les rideaux (6, 7) convergeant dans la direction de transport (1).

4. Installation de triage selon la revendication 1, 2 ou 3, caractérisée en ce que le rideau (6, 7) est constitué d'un rail de guidage de chaîne (12) avec une chaîne de transport (11) qui y circule, en ce que des chaînes individuelles (10) formant le rideau, qui pendent de la chaîne de transport, sont prévues, lesquelles présentent, dans la zone inférieure, un poids (14) pour renforcer le rideau, ainsi qu'une lèvre en caoutchouc (16).

5. Installation de triage selon une ou plusieurs des revendications précédentes 1 à 4, caractérisée en ce qu'un transporteur plan ou incline (24, 25) est disposé en aval dudit transporteur, sur lequel le mélange de produits de valeur peut être transporté par gravité, le transporteur (24, 25) étant muni d'au moins un moyen de transport supplémentaire (27), au moyen duquel des matières de valeur adhérant au moyen de transport (27), comme des tissus, des bandes, des ficelles, des bas ou analogues, peuvent être évacuées du courant de matières de valeur restant.

6. Installation de triage selon la revendication 5, caractérisée en ce que l'inclinaison du transporteur incline (25) est variable et s'élève, de préférence, de 30° à 60°.

7. Installation de triage selon la revendication 5 ou 6, caractérisée en ce que le moyen de transport (27) est réalisé sous forme de chaîne à rouleaux rotative avec des broches (28) faisant saillie dans le plan de transport (25), ou de lame de scie rotative et/ou de tapis roulant à coefficient de frottement élevé ou analogue.

8. Installation de triage selon la revendication 5, caractérisée en ce que, par rapport au courant de produits de valeur, avant les moyens de transport (27), sont prévus des dispositifs de rejet (36) pour créer un effet de tremplin.

9. Installation de triage selon une ou plusieurs des revendications précédentes 5 à 8, caractérisée en ce que l'extrémité (31) de la chaîne à rouleaux rotative (27) ou analogue fait saillie en surplomb du plan de transport (25), et en ce que, au-dessous de cette zone, sont prévus des dispositifs de réception ou d'autres transporteurs (32) pour la fraction qui ne doit pas être évacuée avec le moyen de transport (27).

Fig 2

Fig1

Fig 3

Fig 4